(19) Europäisches Patentamt
European Patent Office
Office européen des brevets

(11) **EP 1 994 390 B1**

(12) **FASCICULE DE BREVET EUROPEEN**

(45) Date de publication et mention
de la délivrance du brevet:
**19.08.2009 Bulletin 2009/34**

(21) Numéro de dépôt: **07731108.2**

(22) Date de dépôt: **07.03.2007**

(51) Int Cl.:
*G01M 15/12* *(2006.01)*

(86) Numéro de dépôt international:
**PCT/FR2007/000410**

(87) Numéro de publication internationale:
**WO 2007/101946 (13.09.2007 Gazette 2007/37)**

(54) **METHODE D'ESTIMATION EN TEMPS REEL DE PARAMETRES DE COMBUSTION D'UN MOTEUR A PARTIR DE SIGNAUX VIBRATOIRES**

VERFAHREN ZUR ECHTZEITSCHÄTZUNG VON MOTORVERBRENNUNGSPARAMETERN AUS SCHWINGUNGSSIGNALEN

METHOD FOR REAL-TIME ESTIMATION OF ENGINE COMBUSTION PARAMETERS FROM VIBRATORY SIGNALS

(84) Etats contractants désignés:
**DE GB IT**

(30) Priorité: **08.03.2006 FR 0602111**

(43) Date de publication de la demande:
**26.11.2008 Bulletin 2008/48**

(73) Titulaire: **IFP**
**92852 Rueil-Malmaison Cédex (FR)**

(72) Inventeurs:
• **CHAUVIN, Jonathan**
**F-94300 Vincennes (FR)**
• **BENTOLILA, Yohan**
**F-92100 Boulogne-Billancourt (FR)**
• **GRONDIN, Olivier**
**F-78380 Bougival (FR)**

(56) Documents cités:
**EP-A1- 0 724 159** **US-A1- 2004 236 494**

• **OPPENHEIM A V ET AL: "NONLINEAR FILTERING OF MULTIPLIED AND CONVOLVED SIGNALS" PROCEEDINGS OF THE IEEE, IEEE. NEW YORK, US, vol. 56, no. 8, août 1968 (1968-08), pages 1264-1291, XP000946572 ISSN: 0018-9219**

## Description

La présente invention concerne une méthode d'estimation en temps réel de paramètres de combustion d'un moteur à combustion interne à partir de la réponse vibratoire du moteur issue d'un capteur de vibration (accéléromètre).

L'estimation de paramètres de combustion selon l'invention, peut être utilisée dans le cadre du contrôle de la combustion d'un moteur à combustion interne.

Les normes de réduction des émissions polluantes des véhicules ont conduit à une adaptation progressive des technologies moteur se manifestant par l'introduction d'actionneurs supplémentaires (vanne de recirculation des gaz d'échappement, injection directe électronique, turbine à géométrie variable) et de nouveaux modes de combustion (la combustion Diesel homogène ou la combustion essence stratifiée). Dans ce contexte, le moteur est devenu un assemblage de systèmes complexes qui nécessite une gestion par des techniques modernes de l'automatique. La fonction du contrôle moteur consiste à gérer les actionneurs disponibles afin de garantir les performances du moteur tout en satisfaisant les contraintes environnementales. Un aspect fondamental du contrôle moteur réside dans l'asservissement de la combustion via un pilotage précis des conditions thermodynamiques dans le cylindre (température, pression de suralimentation, composition du mélange admis) et du réglage des paramètres d'injection.

État de la technique

Les nouveaux modes de combustion, tel que la combustion Diesel homogène, sont beaucoup moins polluants que les combustions classiques (essence ou Diesel) mais elles sont en contrepartie beaucoup plus sensibles. Elles impliquent donc un investissement supplémentaire en terme de régulation. Le contrôle bouclé de la combustion n'est possible que si l'on dispose d'informations relatives au déroulement de la combustion et sur lesquels il soit possible d'agir par le biais des actionneurs disponibles. Ces paramètres peuvent êtres issus de la mesure directe de la pression dans la chambre de combustion à l'aide d'un capteur spécifique. Cette méthode permet d'accéder directement aux paramètres physiques de la combustion, mais la durée de vie et le coût de ce type de capteurs n'autorisent pas encore de mise en série sur véhicule. A l'heure actuelle, il est plus réaliste de s'orienter vers des techniques alternatives telles que l'estimation des paramètres de combustion à partir de mesures non intrusives. Voici, une synthèse des méthodes existantes :

Interprétation du courant d'ionisation : Le principe consiste à mesurer le courant d'ionisation généré pendant la combustion. Lors de la combustion, certaines réactions chimiques occasionnent des dégagements d'ions. Leur production est influencée par les conditions de température et de pression dans le cylindre. Pour les détecter, la bougie est alimentée en permanence par une tension de faible amplitude. Le courant d'ionisation contient de l'information sur les phases successives de la combustion : l'allumage, la propagation du front de flamme et une phase associée aux variations de la pression et de la température en fin de réaction. Eriksson et Nielsen ont montré dans le document suivant par exemple, que la pression maximale au cours d'un cycle et son argument sont identifiables en interprétant le courant d'ionisation :

- L. Eriksson, Spark advance modeling and control, Ph.D. thesis, Linköping University, Sweden, 1999.

Analyse de la vitesse de rotation instantanée du vilebrequin : La vitesse est mesurée à l'aide d'un encodeur monté à l'une des extrémités du vilebrequin. La pression cylindre est reconstruite par inversion de la chaîne cinématique du moteur, le modèle de celle-ci étant bien évidemment connu. On peut par exemple se référer au document suivant :

- S. J. Citron, J. E. O'Higgins & L. Y. Chen, Cylinder by cylinder engine pressure and pressure torque waveform determination utilizing speed fluctuations, SAE Paper (1989), no. 890486.

Reconstruction à partir des mesures des vibrations du moteur :

Les vibrations d'un moteur à combustion interne peuvent être mesurées à l'aide d'un capteur, appelé accéléromètre, monté sur le moteur. On rappelle qu'un accéléromètre est un capteur qui, dans un système de référence donné, mesure l'accélération du corps auquel il est fixé (ou une de ses composantes) et d'étudier les chocs et les vibrations en résultant. L'extraction de paramètres de combustion cohérents à partir d'un accéléromètre est rendue difficile par la nature du signal délivré. En effet, celui-ci ne contient pas uniquement des informations relatives à la combustion car la réponse vibratoire du moteur est aussi due à d'autres évènements tels que le claquement des injecteurs, le retournement du piston au point mort haut, les vibrations induites par le système de distribution, etc.

L'utilisation de capteurs de type accéléromètre a déjà fait l'objet de travaux antérieurs à ceux présentés ici. On peut citer par exemple les documents suivants, dans lequel, à partir du signal issu de l'accéléromètre on essaie d'estimer la pression cylindre :

- Y. Gao & R. B. Randall, Reconstruction of Diesel engine cylinder pressure using a time domain smoothing technique, Mechanical Systems and Signal Processing 13 (1999), no. 5, 709-722.

- H. Du, L. Zhang & X. Shi, Reconstructing cylinder pressure from vibration signals based on radial basis function networks, Proceedings of the Institution of Mechanical Engineers, Part D 215 (2001), 761-767.

- R. Johnsson, Cylinder pressure reconstruction based on complex radial basis function networks from vibration and speed signals. Mechanical Systems and Signal Processing, 2006.

Du *et al.* traitent le problème d'estimation de la pression cylindre par le biais de techniques de traitement du signal faisant appel à la déconvolution ou au filtrage inverse. Ils ont démontré la capacité d'un réseau de neurones à réaliser une approximation de la fonction de transfert non linéaire entre l'évolution de la pression cylindre et le signal vibratoire généré. Johnsson utilise une méthode similaire suivant laquelle le signal issu de l'accéléromètre est combiné au signal de régime moteur pour reconstruire le signal de pression et les paramètres de combustion à l'aide d'un réseau de neurones dont les entrées sont des variables imaginaires.

D'autres méthodes utilisant des capteurs accélérométriques pour contrôler la combustion d'un moteur sont également connues :

Par le brevet EP1116946, on connaît une méthode et un système de contrôle de la combustion à partir de signaux issu d'un accéléromètre selon laquelle le signal mesuré est fenêtré (période d'occurrence de la combustion). Ce signal est ensuite traité pendant chaque boucle de contrôle, et il est comparé à un signal de référence afin de déterminer les modifications à apporter aux paramètres de combustion. Le traitement du signal issu de l'accéléromètre comprend trois étape principales : une rectification, un filtrage et une intégration.

Le brevet US2004267430 (WO05001263) décrit un procédé de traitement de signaux accélérométriques issues des vibrations d'un moteur à combustion interne. En particulier, les signaux sont filtrés par des filtres spectraux et la courbe d'analyse de combustion est reconstruite par déconvolution d'une fonction de transfert identifiée à partir d'une base de données expérimentale. Il en résulte alors une estimation des paramètres de combustion permettant le contrôle de la combustion. Par exemple, le SoC (Start of Combustion) est estimé à partir d'un polynôme fonction du dégagement d'énergie, de son angle maximal et de la pression de suralimentation.

Le brevet DE19536110 (FR 2739414) décrit un procédé de traitement de signaux accélérométriques issues des vibrations pour le contrôle de la combustion d'un moteur Diesel. En particulier, les signaux sont filtrés dans deux bandes de fréquences différentes. La première bande de fréquence [10 kHz, 30 kHz] permet d'extraire des composantes associées à l'injection à l'aide d'un dispositif de seuillage. La seconde bande de fréquence [0.5 kHz, 4 kHz] permet d'extraire les composantes du signal engendrées par la combustion en utilisant une méthode de seuillage identique.

Le brevet FR 2834789 décrit un procédé de traitement du signal de cliquetis. La méthode proposée consiste à adapter la fréquence d'échantillonnage d'acquisition au régime moteur. La transformée de Fourier est calculée pour les différents groupes de valeur d'échantillonnage pour une fréquence d'intérêt. Les informations sur la combustion résultent de la sommation des résultats des transformées de Fourier.

US 2004/236494 A1 divulgue une méthode de diagnostique universelle pour des moteurs à combution. EP 0 724 159 A1 divulgue une méthode pour l'analyse des moteurs à combustion basée sur des données provenant d'un capteur de vibration.

Les paramètres issus des précédentes approches ne sont pas exploitables directement pour des applications liées au diagnostic et au contrôle des moteurs à combustion interne. Ces méthodes reposent sur une intégration temporelle d'un signal issu d'un accéléromètre. Le traitement du signal issu de l'accéléromètre ne s'effectue pas en temps réel, De plus, ces méthodes dépendent fortement de la nature de la combustion et/ou de la technologie du capteur utilisé. Leur champ d'application est donc restreint.

La méthode selon l'invention propose une méthode pour contrôler la combustion d'un moteur à combustion interne, indépendante de la nature de la combustion et de la technologie du capteur de vibration utilisé, à partir du traitement du signal issu d'un accéléromètre s'appuyant sur une estimation en temps réel de la décomposition harmonique du signal accélérométrique. La méthode proposée assure le calcul en temps réel d'indicateurs de l'état de la combustion.

**La méthode selon l'invention**

L'invention concerne une méthode pour déterminer des paramètres de combustion d'un moteur à combustion interne comprenant au moins un capteur de vibration, dans laquelle on acquiert en continu et en fonction de l'angle vilebrequin un signal vibratoire issu dudit capteur et représentatif des vibrations dudit moteur ledit signal vibratoire comportant plusieurs harmoniques, et l'on réalise en temps réel un filtrage dudit signal vibratoire à l'aide d'un filtre. La méthode se caractérise en ce que l'on réalise les étapes suivantes :

- on construit un modèle de la dynamique dudit filtre et à partir de ce modèle on définit un estimateur non linéaire de type adaptatif comportant d'une part, un terme lié à la dynamique et d'autre part un terme de correction ;

- on estime en temps réel des coefficients de la décomposition de Fourier dudit signal vibratoire acquis à l'aide dudit estimateur ;

- on détermine l'énergie de k harmoniques dudit signal vibratoire par la somme de k coefficients de la décomposition de Fourier mis au carré, et l'on utilise la dite énergie pour déduire en temps réel des paramètres de combustion.

Le signal vibratoire comportant plusieurs harmoniques, on peut estimer lesdits coefficients de la décomposition de Fourier uniquement pour les harmoniques corrélées avec la combustion.

Selon l'invention on peut sélectionner les harmoniques corrélées avec la combustion en réalisant une analyse spectrale, une analyse temps/fréquence, ou en choisissant ces harmoniques dans la bande de fréquence 300Hz - 3000Hz. Le nombre d'harmoniques sélectionnées peut généralement être égal trois.

On peut également déterminer une plage angulaire incluant l'intégralité de la réponse vibratoire liée à la combustion, pour restreindre le signal vibratoire à cette plage angulaire avant de réaliser le filtrage. Le filtrage peut être réalisé à partir d'un filtre passe-bande.

Concernant l'estimateur, non linéaire de type adaptatif, ce type d'estimateur est bien adapté à l'estimation en temps réel.

Enfin, selon l'invention les paramètres de combustion peuvent représenter au moins l'un des phénomènes suivant : le début de la combustion (SoC), le maximum de la combustion (MoC), la durée de la combustion (DoC) et l'énergie de la combustion _ (EoC).

On peut appliquer l'invention au cadre du contrôle moteur, en modifiant des paramètres moteurs en fonction de la détermination des paramètres de combustion, pour contrôler la combustion du moteur.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- la figure 1 montre le schéma du principe du contrôle bouclé de la combustion selon l'invention.

- la figure 2 montre un schéma fonctionnel décomposant le calcul des paramètres Poc.

- la figure 3A représente le signal accélérométrique mesurés(a) et le signal accéléromètrique reconstruit $\hat{s}(\alpha)$.

- la figure 3B illustre l'énergie $E(\alpha)$ des trois premiers coefficients de Fourier.

- la figure 3C illustre l'intégrale de l'énergie $IE(\alpha)$.

- la figure 3D représente la pression cylindre (PCN).

- la figure 3E illustre la vitesse de libération d'énergie (VLE).

- la figure 3F présente la fraction de masse brûlée (FMB).

- la figure 4 montre la corrélation SoC et MFB10.

- la figure 5 montre la corrélation entre le MoC et l'angle d'occurrence du maximum sur la courbe de vitesse de libération d'énergie (AngleMaxROHR).

- la figure 6 montre la corrélation entre l'EoC et le bruit AVL en dB.

**Description détaillée de la méthode**

La méthode selon l'invention propose une méthode pour contrôler la combustion d'un moteur à combustion interne, à partir d'un traitement d'un signal issu d'un accéléromètre et permettant de délivrer en temps réel des paramètres de combustion (PoC) ayant un sens physique pour qualifier directement la combustion. La méthode est indépendante de la nature de la combustion et de la technologie du capteur de vibration utilisé.

L'invention est décrite selon un mode de réalisation particulier, dans lequel on s'attache à décrire la méthode appliquée à un cylindre unique sans intégrer de particularismes associés au mode de combustion du moteur (Diesel, Diesel LTC, essence, essence fonctionnant en mode stratifié) et à la technologie du ou des capteurs de vibration utilisés. La nature du moteur à combustion interne ainsi que la technologie du capteur de vibration utilisé n'influence pas le principe de la méthode.

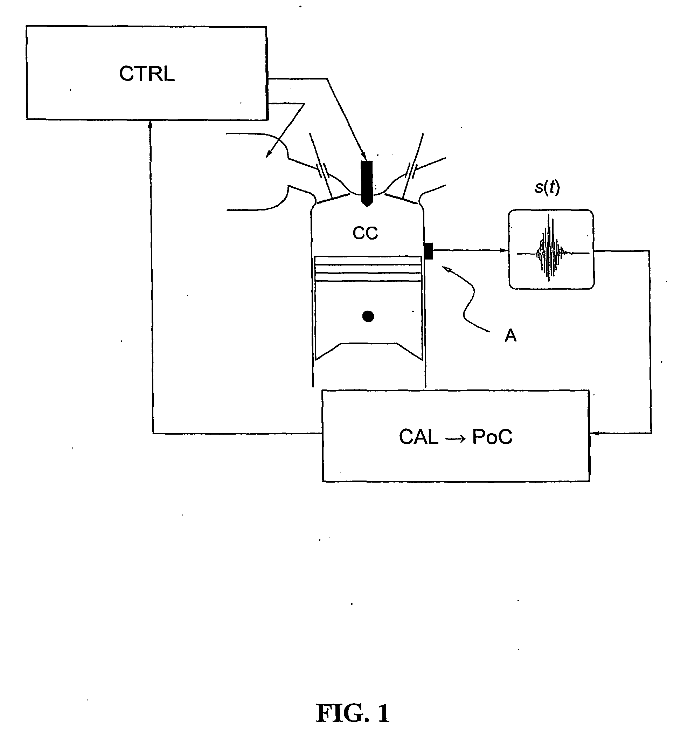

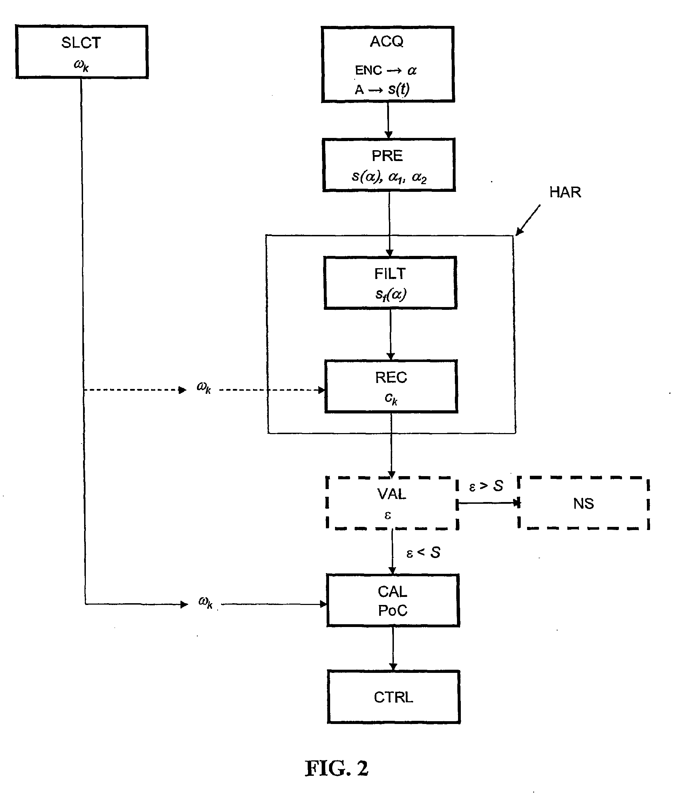

La figure 1 illustre le principe général de la méthode de contrôle bouclé de la combustion selon l'invention. Dans un premier temps on acquiert un signal vibratoire ($s(t)$) issu d'un accéléromètre (A). Ce signal vibratoire correspond à un ensemble de phénomènes, dont la combustion dans la chambre de combustion (CC). On sait, que seuls certains harmoniques de ce signal contiennent de l'information qualifiant la combustion. L'idée est donc de calculer les différentes harmoniques de ce signal vibratoire en temps réel, puis de sélectionner celles qui correspondent à la combustion. Enfin à partir de ces harmoniques portant une information sur la combustion, on calcule (CAL) des paramètres physiques (PoC) qualifiant directement la combustion, toujours en temps réel et permettant l'ajustement (CTRL) des paramètres du moteur pour réguler la combustion. Comme l'illustre la figure 2, la méthode de contrôle moteur de la combustion peut se décomposer en cinq étapes principales :

Étape préliminaire :

Étape 1- Sélection des harmoniques qualifiant la combustion (SLCT)

Étapes réalisées en temps réel :

Étape 2- Acquisition d'un signal issu d'un capteur (A) de vibration (ACQ)

Étape 3- Détermination en temps réel des harmoniques du signal (HAR)

Étape 4- Détermination en temps réel de paramètres pour qualifier directement la combustion (CAL)

Étape 5- Contrôle moteur : Ajustement des paramètres du moteur pour réguler la combustion (CTRL)

### Étape 1 : Sélection des harmoniques qualifiant la combustion

Toute grandeur oscillante périodique (ou grandeur alternativement croissante et décroissante), comme le signal vibratoire, peut être considérée comme la somme de composantes sinusoïdales dont les fréquences sont multiples entiers de la fréquence fondamentale. Cette dernière, appelée aussi fréquence de base, est égale à l'inverse de la période de la grandeur considérée. Les fréquences multiples sont des composantes sinusoïdales dont la fréquence est un multiple entier de la fréquence fondamentale. Ces fréquences multiples sont appelées les harmoniques.

Chacune des harmoniques portent une ou plusieurs informations : bruit, combustion, claquement des injecteurs, retournement du piston au point mort haut, vibrations induites par le système de distribution, etc.

L'objectif est, dans un premier temps, de sélectionner, parmi ces composantes, celles qui contiennent de l'information qualifiant la combustion. Cette opération revient à extraire la partie utile du signal issu de l'accéléromètre tout en s'affranchissant des phénomènes parasites.

Pour déterminer les harmoniques permettant de qualifier la combustion, deux méthodes peuvent être envisagées : l'analyse temps/fréquence ou l'analyse spectrale. Ces méthodes sont appliquées sur des signaux issus d'accéléromètres dans le cadre d'expériences préalables à la mise en place des étapes permettant un contrôle de la combustion du moteur en temps réel.

L'analyse temps/fréquence du signal peut être interprétée comme une fenêtre glissante dans laquelle on effectue une transformée de Fourier rapide (FFT), bien connue des spécialistes, à chaque pas de temps. Cette forme de transformée de Fourier est aussi connue comme la transformée de Fourier à temps court et sa représentation dans le plan temps fréquence est donnée par un spectrogramme. Un spectrogramme est un diagramme associant à chaque instant $t$ d'un signal, son spectre de fréquence. Dans son format le plus courant, l'axe horizontal représente le temps et l'axe vertical la fréquence. Chaque point à l'intérieur du graphique est doté d'une certaine intensité qui indique l'amplitude (souvent en décibels) d'une fréquence particulière à un temps donné. Dans le domaine de l'industrie automobile, il est courant de remplacer l'axe temporel par un axe angulaire, correspondant à la valeur de l'angle vilebrequin. Sur un tel spectrogramme, la périodicité des combustions apparaît clairement sur l'axe angulaire. Ces événements correspondent à des phénomènes périodiques et synchrones avec les événements intervenant lors d'un cycle moteur dont une partie est liée à la combustion. Classiquement, dans le cadre d'analyse de signaux vibratoires issus d'accéléromètre placé dans un moteur à combustion interne, on distingue clairement des zones d'étalement angulaire dans certaines bandes de fréquence entre 5000Hz et 10000Hz, et des zones d'évènements brefs entre 0 et 3000 Hz. Cette dernière bande de fréquence correspond à des évènements de nature plus impulsive et donc plus proche d'un phénomène de combustion.

On peut également utiliser une analyse spectrale, pour affiner le résultat. En effet, le calcul d'une simple FFT ne permet pas toujours d'effectuer une analyse spectrale fine du signal. Une autre technique d'analyse fréquentielle permet d'obtenir une telle précision. Il s'agit de l'analyse spectrale qui donne accès à la Densité Spectrale de Puissance (DSP) permettant de mesurer précisément la répartition dans l'axe des fréquences de la puissance spectrale d'un signal stationnaire. Comme méthode d'analyse spectrale permettant de déterminer la DSP, on peut par exemple utiliser la méthode de modélisation de Yule-Walker décrite dans le document suivant :

Friedlander, B., and B. Porat, "The Modified Yule-Walker Method of ARMA Spectral Estimation" IEEE Transactions on Aerospace Electronic Systems, AES-20, No. 2 (Mars 1984), pp. 158-173

L'analyse spectrale fournit ainsi une courbe de la DSP en fonction de la fréquence. Sur ce type de courbe, dans le cadre de traitement de signaux issus d'accéléromètre, on distingue différents phénomènes fréquentiels dont chaque pic représente un ou des événements. A la suite d'analyses basées sur l'expérience en contrôle moteur, trois types de phénomènes ont pu être isolés : combustion, injection et bruit divers. Classiquement, dans le cadre d'analyse de signaux vibratoires issus d'accéléromètre placé dans un moteur à combustion interne, la seule bande de fréquence dont la composante harmonique ne semble être issue que des vibrations provoquées par la combustion correspond à la bande basse entre 300Hz et 3000Hz. Ceci affine la bande déterminée par une analyse temps/fréquence.

Ainsi, selon la méthode, on peut soit fixer la bande de fréquence d'intérêt pour qualifier la combustion entre 300Hz et 3000Hz, soit déterminer, en fonction du type de moteur par exemple, la bande de fréquence adéquate à l'aide d'une analyse spectrale.

Dans la suite de la description, on travaille dans la bande de fréquence 300Hz - 3000Hz pour estimer des paramètres de combustion (PoC).

Les harmoniques (composantes fréquentielles) du signal sélectionnées sont notées : $\omega_k$ avec $k \in [1,p]$. L'entier $p$ est choisi de façon à ce que ces $p$ harmoniques appartiennent à la bande de fréquence 300Hz - 3000Hz.

Les étapes 2 à 5 sont réalisées en temps réel.

### Étape 2 : Acquisition d'un signal issu d'un capteur de vibration

La méthode de contrôle de la combustion repose sur le traitement d'un signal délivré en continu par un accéléromètre. Ce type d'acquisition est bien connu des spécialistes. Cependant, selon la méthode de traitement du signal proposée par la méthode selon l'invention, le capteur vibratoire (l'accéléromètre) peut être monté indifféremment sur la culasse ou sur le bloc moteur. La technologie du capteur de vibration utilisé n'influence pas non plus le principe de la méthode. Le signal vibratoire acquis par l'accéléromètre est noté $s(t)$. La variable $t$ représente le temps.

Comme l'illustre la figure 2, le signal délivré par l'accéléromètre, s(t), constitue une des deux entrées de la chaîne de traitement. Le second signal, $\alpha(t)$, est un signal fournissant la valeur de l'angle vilebrequin en fonction du temps. L'angle vilebrequin est noté $\alpha$. Ce signal est délivré par un codeur angulaire (ENC).

Si l'invention permet de s'affranchir de la position du capteur vibratoire, de sa technologie ou encore du mode de combustion du moteur, en revanche, certains paramètres de réglage peuvent être modifiés afin d'optimiser la qualité de l'estimation des paramètres de combustion. Par exemple, le signal $s(t)$ peut être mis à l'échelle en fonction du dispositif d'acquisition et du type de capteur utilisé.

### Étape 3 : Détermination en temps réel des harmoniques du signal

L'objectif est, dans un premier temps, d'estimer en temps réel toutes les composantes harmoniques du signal vibratoire issu de l'accéléromètre, ou tout au moins, les composantes harmoniques utiles sélectionnées à l'étape 1. Le fait de reconstruire ces composantes en temps réel signifie que l'on n'enregistre pas un signal en continue pour le traiter ultérieurement pour obtenir les composantes harmoniques, par une décomposition de Fourier par exemple. Au contraire, ces composantes sont estimées au fur et à mesure que le signal est mesuré. Pour ce faire on utilise un observateur de Fourier. La méthode peut comporter les étapes suivantes :

- Extraction de la partie utile du signal : prétraitement du signal vibratoire (PRE)
- Estimation des harmoniques par un observateur de Fourier (HAR)

*Extraction de la partie utile du signal : prétraitement du signal vibratoire (PRE)*

Le traitement du signal issu de l'accéléromètre constitue un élément primordial dans la chaîne de contrôle moteur puisqu'il délivre des variables exploitables pour le contrôle bouclé de la combustion, comme l'illustre la figure 2. La première étape consiste en un traitement du signal vibratoire pour tirer un maximum d'information utile. Ce prétraitement (avant la reconstruction des harmoniques et des paramètres de combustion) pour extraire la partie utile du signal vibratoire peut comporter les étapes suivantes : échantillonnage de $s(t)$ dans le domaine angulaire, détermination d'une fenêtre angulaire incluant la combustion.

*Échantillonnage de $s(t)$ dans le domaine angulaire*

Le signal $s(t)$ est échantillonné dans le domaine angulaire. Ce signal est alors noté $s(\alpha)$. Le domaine angulaire est, par opposition au domaine temporel, le domaine dans lequel toutes les données sont exprimées en fonction de l'angle vilebrequin. Cette étape permet de travailler dans un repère invariant comme pour toutes les machines tournantes. Le second intérêt à travailler dans le domaine angulaire, vient du fait que l'injection est pilotée de manière angulaire, par rapport au point mort haut (PMH), ce qui facilite le contrôle de l'injection pour la combustion. Mais il faut évidemment s'assurer du bon calage de l'encodeur angulaire (ENC) qui définit l'origine du repère dans le domaine angulaire comme étant le point mort haut.

*Détermination d'une fenêtre angulaire [$\alpha_1$ ; $\alpha_2$] incluant la combustion*

Le signal $s(t)$ est mesuré en continu par une carte d'acquisition, puis transformé dans le domaine angulaire ($s(\alpha)$). Cependant, la suite du traitement ne s'effectue que sur une plage angulaire bornée par des angles $\alpha_1$, et $\alpha_2$. Ces deux paramètres font partie des éléments de calibration de l'observateur de combustion (observateur de Fourier selon l'invention). Les limites $\alpha_1$ et $\alpha_2$ dépendent de la plage angulaire d'occurrence de la combustion. Celle-ci peut être précoce (plusieurs degrés avant le PMH) ou, au contraire, extrêmement tardive (20 degrés après le PMH) selon le mode de combustion. Pour un moteur donné, les limites $\alpha_1$ et $\alpha_2$ doivent être choisies afin d'inclure l'intégralité de la réponse vibratoire de la combustion, et ceci sur la totalité de la plage de fonctionnement du moteur. Ces angles sont définis par rapport au point mort haut qui représente l'origine du repère. Donc, l'angle $\alpha_1$ est de signe négatif et $\alpha_2$ de signe positif.

En somme, la méthode propose de traiter le signal vibratoire sur une fenêtre de temps déterminée du signal issu du capteur, dont la position correspond à une position angulaire déterminée du vilebrequin du moteur. Le signal du capteur contenant, à l'intérieur de cette fenêtre de temps ou de la fenêtre angulaire [$\alpha_1$; $\alpha_2$] correspondante, des informations concernant le comportement vibratoire du moteur, permettant de déterminer des paramètres de combustion pour apprécier la qualité de la combustion.

*Estimation des harmoniques par un observateur de Fourier (HAR)*

L'idée est de filtrer le signal issu de l'accéléromètre $s(\alpha)$, de le filtrer, puis d'inverser la dynamique du filtre par reconstruction en temps réel des composantes harmoniques utiles, en utilisant un observateur de Fourier. On peut reconstruire les composantes d'un seul ou d'une combinaison de plusieurs signaux accélérométriques issus d'un ou plusieurs capteurs vibratoires montés sur un moteur à combustion interne (bloc moteur et/ou culasse).

*Filtrage passe bande du signal $s(\alpha)$ sur la fenêtre angulaire [$\alpha_1$; $\alpha_2$] (FILT)*

Après avoir été fenêtré, le signal $s(\alpha)$ est filtré à l'aide d'un filtre passe bande qui permet d'éliminer des composantes spectrales inutiles déterminées par analyse spectrale. Ce signal filtré sur la fenêtre [$\alpha_1$; $\alpha_2$] est noté $s_f(\alpha)$. Les fréquences de coupure ($F_1$ et $F_2$) du filtre constituent, elles aussi, des paramètres de réglage de l'observateur de combustion. Celles-ci sont notamment liées à la structure du moteur qui conditionne le contenu fréquentiel de la réponse vibratoire ainsi qu'au capteur qui est caractérisé par une bande passante dépendante de sa technologie. Une analyse spectrale du signal $s(\alpha)$, telle que celle décrite à l'étape 2, permet de choisir la bande de fréquence utile (qualifiant la combustion) et de régler les fréquences de coupure du filtre passe bande ($F_1$ et $F_2$).

*Reconstruction des harmoniques utiles par inversion du filtre passe bande (REC)*

On recherche à reconstruire (estimer), à partir de la mesure $s_f(\alpha)$ du signal filtré issu de l'accéléromètre, les composantes fréquentielles (harmoniques) de ce signal. La méthode comporte principalement les trois étapes suivantes : définition d'un modèle de la dynamique du capteur vibratoire, caractérisation du signal vibratoire par des paramètres quasi invariants au cours du temps, couplage avec un estimateur non linéaire de type adaptatif, et éventuellement, vérification de la qualité de l'estimation.

<u>Modèle de la dynamique du filtre passe-bande</u>

Les vibrations engendrées par le moteur constituent une excitation, noté $\omega$, enregistrée par un capteur vibratoire sous la forme d'un signal, noté $s(\alpha)$. Cette mesure est ensuite filtrée $s_f(\alpha)$ à l'aide d'un filtre passe-bande. Ce filtre peut se mettre, dans le domaine angulaire, sous la forme du système d'état suivant :

$$\begin{cases} \dfrac{dx}{d\alpha} & = & A.x + A_0.\omega \\ y & = & C.x \end{cases} \qquad (1)$$

avec :

$$x = \left[ s_f(\alpha) \quad \frac{ds_f(\alpha)}{d\alpha} \quad ... \quad \frac{d^n s_f(\alpha)}{d\alpha^n} \right],$$

appelé vecteur d'état

$\alpha$ : l'angle vilebrequin
$\omega$ : l'excitation du moteur
$\gamma$ : la sortie du modèle, égale à $C.x$, c'est-à-dire le signal $s_f(\alpha)$ mesuré
$(A, A_0, C)$ : les paramètres définissant le filtre passe-bande utilisé, avec :

$$A = \begin{bmatrix} -a_1 & 1 & 0 & . & . & 0 \\ -a_2 & 0 & 1. & . & . & . \\ . & . & . & . & . & . \\ . & . & . & . & . & 0 \\ -a_{n-1} & 0 & . & . & 0 & 1 \\ -a_n & . & . & . & 0 & 0 \end{bmatrix}, \quad A_0 = \begin{bmatrix} b_1 \\ . \\ b_{n-1} \\ b_n \end{bmatrix}, \quad C = \begin{bmatrix} 1 & 0 & . & 0 \end{bmatrix} \text{ de dimension}$$

$$1 \times n$$

Les coefficients $a_0...a_n$ et $b_0...b_n$ sont définis en fonction des fréquences $F_1$ et $F_2$. Ils correspondent aux coefficients numériques du filtre passe-bande utilisé.
Cette équation (1) constitue le modèle représentant en temps réel la dynamique du filtre passe-bande.

<u>Caractérisation du signal $\omega$ par des paramètres quasi invariants au cours du temps</u>

On recherche à estimer, à partir de ce modèle de la dynamique du filtre et de la mesure $y$ (égale à $s_f(\alpha)$), le signal $\omega$, c'est-à-dire la reconstruction du signal vibratoire engendré par le moteur $s(\alpha)$ avec les fréquences utiles (contenant l'information relative à la combustion). Au cours de la méthode selon l'invention on caractérise ce signal $\omega$ par des paramètres quasi invariants au cours du temps, ce qui permet de réaliser cette estimation en temps réel. En d'autres termes, on définit le signal $\omega$ à l'aide de paramètres qui, à un instant donné, sont des constantes. Pour ce faire, on exploite le fait que le signal $\omega$ est mécaniquement périodique. Ainsi, au lieu de réaliser une estimation du signal fortement variable $\omega$, on peut estimer les coefficients de la décomposition de Fourier de ce signal. On peut également utiliser tous paramètres permettant de décrire le signal ω en relation avec son caractère périodique.

La décomposition en coefficients de Fourier du signal ω, développée en complexe pour la clarté de l'exposé, s'écrit ainsi :

$$\omega(\alpha) = \sum_{k=1}^{p} c_k e^{(i\omega_k \alpha)} \qquad\qquad (2)$$

Les $c_k$ représentent les $p$ coefficients de Fourier de la décomposition du signal ω. On définit ainsi un signal traduisant le signal vibratoire, en fonction des paramètres $c_k$ invariants au cours du temps. En n'utilisant qu'un nombre fini d'harmoniques, le modèle représentant en temps réel la dynamique du capteur vibratoire s'écrit alors :

$$\begin{cases} \dfrac{dx}{d\alpha} & = & A.x + A_0.(\sum_{k=1}^{p} c_k e^{(i\omega_k \alpha)}) \\ \dfrac{dc_k}{d\alpha} & = & 0 & , & \forall k \in [1, p] \\ y & = & C.x \end{cases} \qquad (3)$$

Selon l'invention, le but est d'estimer les coefficients ($c_k$) de Fourier de la décomposition du signal ω.

Couplage avec un estimateur non linéaire de type adaptatif

On souhaite définir un estimateur, que l'on appelle « observateur de Fourier », pour reconstruire l'excitation périodique du signal accélérométrique à partir de sa mesure filtrée $s_f(\alpha)$. Pour cela, la dynamique du filtre est inversée et les composantes fréquentielles du signal accéléromètrique sont reconstruites.

A partir du modèle décrit par le système (3), on définit un estimateur non linéaire de type adaptatif comportant d'une part, un terme lié à la dynamique et d'autre part, un terme de correction :

$$\begin{cases} \dfrac{d\hat{x}}{d\alpha} = A\hat{x} + A_0 \sum_{k=1}^{p} \hat{c}_k e^{(i w_k \alpha)} - L(C\hat{x} - s_f(\alpha)) \\ \dfrac{d\hat{c}_k}{d\alpha} = -e^{(-i w_k \alpha)} L_k (C\hat{x} - s_f(\alpha)), & \forall k \in [1, p] \\ \hat{y} = C\hat{x} \end{cases} \qquad (4)$$

avec:

$\hat{x}$ : estimée de x
$\hat{c}_k$ : estimée de $c_k$
$L$ : une matrice à calibrer
$L_k$ : des matrices à calibrer pour assurer la convergence

Un choix de matrices $L$ et $L_k$ assurant la convergence de l'estimateur (observateur) est :

$$L = \begin{bmatrix} 1 \\ . \\ 1 \end{bmatrix}$$

$$L_k = \frac{1}{k^2 + 1} \qquad \forall\, k \in [1, p]$$

Le système d'équations (4) représente un estimateur non linéaire de type adaptatif permettant d'estimer les coefficients $c_k$ de la décomposition en coefficients de Fourier du signal ω.

Cette méthode assure la reconstruction de l'excitation ω à travers les coefficients $c_k$. Le signal accélérométrique reconstruit $\hat{\omega}$ est donné par la relation suivante :

$$\hat{\omega}(\alpha) = \sum \hat{c}_k(\alpha) e^{i w_k \alpha}$$

Et l'on a: $\hat{y} = C\hat{x} = \hat{s}_f(\alpha)$

Choix des harmoniques

On a considéré le cas où l'on utilisait les harmoniques choisies à l'étape 1 ($\omega_k$) pour reconstruire le signal : k varie entre *1* et *p*, on utilise donc *p* harmoniques, et ces harmoniques portent de l'information qualifiant la combustion.

Cependant, l'estimation $\hat{\omega}(\alpha)$ de l'excitation peut être réalisée à partir d'un nombre d'harmoniques plus important. En effet, plus l'on utilise de coefficients de Fourier, plus la reconstruction de l'excitation ω est précise. On ne sortirait donc pas du cadre de l'invention en choisissant un nombre d'harmoniques (*p*) différent du nombre d'harmoniques sélectionnées à l'étape 1. En revanche, il est évident que plus le nombre d'harmoniques choisi pour reconstruire l'excitation ω est grand, plus le temps de calcul est important. Il faut donc faire un compromis entre la rapidité de calcul et la précision.

L'objectif est donc de déterminer à la fois les $\omega_k$ pertinentes mais également le paramètre *p* adapté, c'est-à-dire, le choix du nombre d'harmoniques nécessaires à la reconstruction du signal. Ce choix dépend des énergies respectives des différentes harmoniques. En général, les trois premières harmoniques sont les plus significatives pour qualifier la combustion et elles suffisent pour reconstruire l'excitation. On prendra dans la majeure partie des cas *p* = 3. Le signal ainsi reconstruit est noté $\hat{s}(\alpha)$.

*Vérification de la qualité de l'estimation (VAL)*

Afin d'éviter l'envoi de paramètres erronés au contrôle moteur, une étape optionnelle, indiquée en pointillé sur la figure 2, permet de valider la pertinence de la reconstruction du signal accélérométrique. Un seuil sur le carré du signal d'erreur (différence entre la mesure et l'estimée) assure cette fonction.

$$\varepsilon = (y - \hat{y})^2$$

Si ce seuil ε est trop important, supérieur à un seuil *S* fixé, l'envoi de paramètres au contrôle moteur n'est pas réalisé (NS). Sinon, on réalise l'étape 4 (CAL).

**Étape 4 : Détermination de paramètres pour qualifier directement la combustion (CAL)**

Dès lors qu'est validée l'estimation des composantes fréquentielles du signal vibratoire, l'opération de contrôle moteur peut être menée. Le contrôle bouclé en régime transitoire de la combustion requiert l'estimation (CAL) en temps réel de paramètres de combustion afin d'atteindre un contrôle cycle à cycle. Le principe de la méthode repose sur l'estimation en temps réel de quatre paramètres, appelés PoC. Ceux-ci permettent de caractériser la combustion dans le cylindre d'un moteur.

Le calcul des paramètres de combustion repose sur l'analyse de l'énergie contenue dans les harmoniques (composantes spectrales) sélectionnées. L'énergie $E$ est donnée par la somme des $k$ premiers coefficients de la décomposition de Fourier délivrés par l'observateur périodique et mis au carré :

$$E(\alpha) = \sum [c_k(\alpha)]^2$$

Ce paramètre a un sens physique puisque l'énergie $E(\alpha)$ augmente avec l'énergie libérée pendant la combustion.

Quatre indicateurs (PoC) retraçant l'historique de la combustion sont définis comme suit :

- le SoC (Start of Combustion) qui s'apparente au début de la réaction dans le cylindre

- le MoC (Maximum of Combustion) qui est lié au maximum de libération d'énergie

- le DoC (Duration of Combustion) est un indicateur de la durée de la réaction

- l'EoC (Energy of Combustion) qui traduit un niveau de bruit généré par la combustion.

Le calcul, à partir du signal vibratoire, de ces quatre paramètres de combustion (PoC) est présenté ci-après.

**Le SoC** (Start of Combustion) correspond à l'angle (en degré) pour lequel l'intégrale normalisée de l'énergie $E$, notée $I$, est égale à 10% de sa valeur finale.

$$I(\alpha) = \frac{\displaystyle\int_{\alpha_1}^{\alpha_2} E(\alpha)d\alpha}{\max\left(\displaystyle\int_{\alpha_1}^{\alpha_2} E(\alpha)d\alpha\right)}$$

$$I(SoC) = 0.1$$

**Le MoC** (Maximum of Combustion) est définit comme étant l'angle (en degré) d'occurrence du maximum de la fonction $E$.

$$E(MoC) = \max(E(\alpha))$$

**Le DoC** (Duration of Combustion) est défini par l'intervalle angulaire (en degré) entre le SoC et l'angle $\alpha_{90}$ pour lequel la fonction $I$ atteint 90% de sa valeur finale.

$$DoC = \alpha_{90} - SoC$$

$$I(\alpha_{90}) = 0.9$$

**L'EoC** (Energy of Combustion) est donnée par intégration du signal $E$.

$$EoC = \int_{T1}^{T2} E(\alpha)d\alpha$$

On peut également, selon un autre mode de réalisation, utiliser une fonction de lissage $F$, pour lisser l'énergie du signal : $E'(\alpha) = F(E(\alpha))$

Cette énergie lissée, notée $E'(\alpha)$, peut alors être utilisée à la place de $E(\alpha)$ pour calculer les paramètres de combustion (PoC).

### Étape 5 : Contrôle moteur de la combustion (CTRL)

C'est en se basant sur la combinaison des quatre paramètres de combustion PoC que la mise en oeuvre de stratégies de commande en boucle fermée est possible. La problématique du contrôle des moteurs multicylindres est souvent liée à des déséquilibres cylindre à cylindre que les contrôleurs basés sur des cartographies ne peuvent résoudre. En effet, une cartographie de base est appliquée pour chacun des cylindres sans tenir compte d'éventuelles variations. La régulation en boucle fermée apporte un terme correctif supplémentaire et adapté à la combustion dans chaque cylindre. Les dérives cylindre à cylindre peuvent avoir plusieurs origines :

- une mauvaise répartition de la masse de gaz brûlé,

- une variation de la thermique cylindre à cylindre,

- un défaut d'injection pilote due à une dérive de l'actionneur.

Les phénomènes cités précédemment forment un faisceau de vecteurs altérant à la fois le rendement de la combustion et l'agrément en terme de bruit et de vibrations. On peut noter que la variation de la propriété de la combustion peut aussi modifier le profil de la combustion et qu'alors, les valeurs de réglage contenues dans les cartographies d'injections sont caduques. Les paramètres PoC sont utilisés pour compenser des variations des caractéristiques du carburant ou des déséquilibres cylindre à cylindre. A titre d'exemple, voici deux stratégies de contrôle à partir de paramètres PoC.

*Réglage du phasage de la combustion.* Le phasage de la combustion est une composante primordiale car elle entre en ligne de compte dans l'optimisation du rendement de la combustion et des émissions polluantes. Dans ce cas précis, le SoC et le MoC sont des candidats idéaux pour envisager un bouclage de l'avance à l'injection puisqu'ils sont représentatifs du phasage de la combustion.

*Asservissement du bruit.* Le bruit généré par la combustion peut, s'il dépasse certaines valeurs limites, affecter l'agrément du véhicule. L'asservissement de la masse introduite pendant l'injection pilote assure une réduction du bruit. Il est aussi possible de contrôler l'instant du début de combustion en modifiant la masse de gaz brûlé réintroduite dans le cylindre. Dans ce cas, c'est le paramètre EoC qui informe sur le niveau de bruit de chaque cylindre, c'est donc le paramètre idéal pour envisager une commande par rétroaction.

### Exemple d'application

Les performances de l'invention sont illustrées au travers d'une application à un moteur diesel fonctionnant en mode HCCI. Pour des raisons didactiques, l'exemple se focalise sur un seul cylindre mais la méthode peut aisément se généraliser aux moteurs multicylindres. Le but de cet exemple est de montrer la pertinence des paramètres PoC issus de l'observateur de Fourier en les confrontant avec des paramètres issus de l'analyse du signal de pression cylindre. La régulation de la masse injectée lors de l'injection pilote est aussi présentée, cette stratégie a pour finalité de réduire le niveau de bruit du moteur.

### Calibration de l'observateur.

Le tableau 1, où $N_{cyl}$ représente le nombre de cylindres du moteur, présente les valeurs des paramètres nécessaires à la calibration de l'observateur de Fourier.

*Tableau 1 : Récapitulatif des paramètres de réglages adaptés au moteur d'essai.*

| Paramètre | Unité | Description | Valeur |
|---|---|---|---|
| $\alpha_1$ | degré | borne inférieure de la fenêtre angulaire | -20 |
| $\alpha_2$ | degré | borne supérieure de la fenêtre angulaire | 50 |
| $F_1$ | hertz | fréquence de coupure basse du filtre passe bande | 300 |
| $F_2$ | hertz | fréquence de coupure haute du filtre passe bande | 3000 |
| $p$ | - | nombre de coefficient de Fourier nécessaires à la reconstruction du signal | 3 |
| $L_1$ | - | matrice de l'observateur périodique | $\dfrac{1}{2}$ |
| $L_2$ | - | matrice de l'observateur périodique | $\dfrac{1}{5}$ |
| $L_3$ | - | matrice de l'observateur périodique | $\dfrac{1}{10}$ |
| $w_1$ | rad/s | pulsation du premier harmonique | $10\dfrac{\pi}{360}Ncyl$ |
| $w_2$ | rad/s | pulsation du second harmonique | $20\dfrac{\pi}{360}Ncyl$ |
| $w_3$ | rad/s | pulsation du troisième harmonique | $30\dfrac{\pi}{360}Ncyl$ |

<u>Résultats de l'observateur périodique.</u>

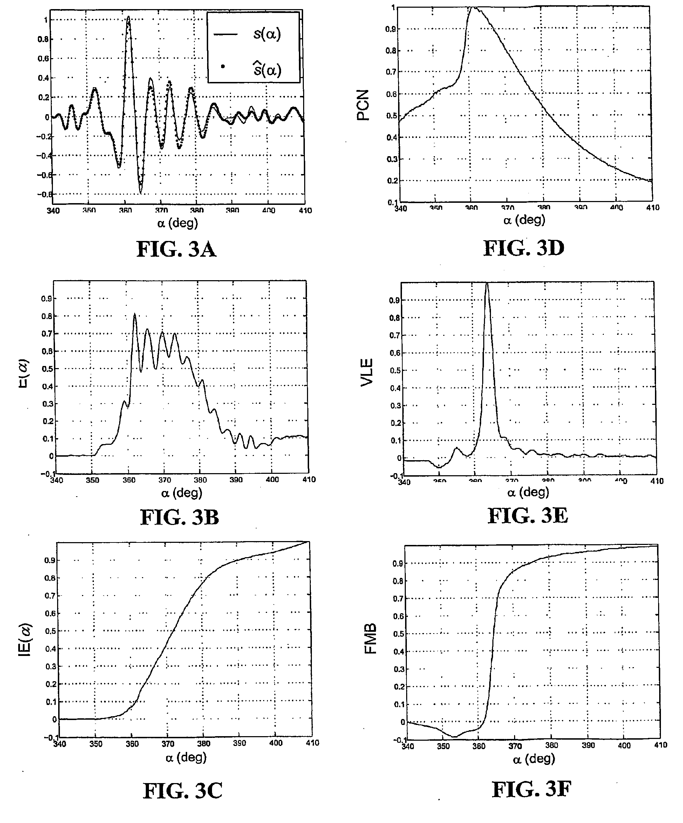

Les figures 3A à 3F illustrent les résultats obtenus par étude de la réponse vibratoire résultant de l'excitation pour un point de fonctionnement moteur donné :

Le signal accéléromètrique mesuré $s(\alpha)$ et le signal accéléromètrique reconstruit $\hat{s}(\alpha)$ sont représentés sur la figure 3A.

La figure 3B illustre l'énergie $E(\alpha)$ des trois premiers coefficients de Fourier et la figure 3C l'intégrale de l'énergie $IE(\alpha)$.

Ces résultats sont comparés avec une étude du signal de la pression dans la chambre de combustion pour le même point de fonctionnement moteur. La figure 3D représente la pression cylindre (PCN), la figure 3E illustre la vitesse de libération d'énergie (VLE), et la figure 3F présente la fraction de masse brûlée (FMB).

Les figures 3A à 3F montrent l'analogie entre les résultats obtenus par la méthode selon l'invention et ceux obtenus par une étude du signal de la pression.

<u>Corrélations des paramètres PoC avec ceux issus de l'analyse de la pression cylindre.</u>

La méthode de calcul des paramètres PoC a été testée sur une basé de données de signaux accéléromètriques issus de campagnes expérimentales sur le banc d'essais. La base de donnée comprend des variations paramétriques des grandeurs suivantes :

- Le régime moteur.

- La pression moyenne indiquée (PMI).

- L'avance à l'injection (AVI).

-    La fraction de gaz brûlé à l'admission (BGR : Burn Gaz Rate).

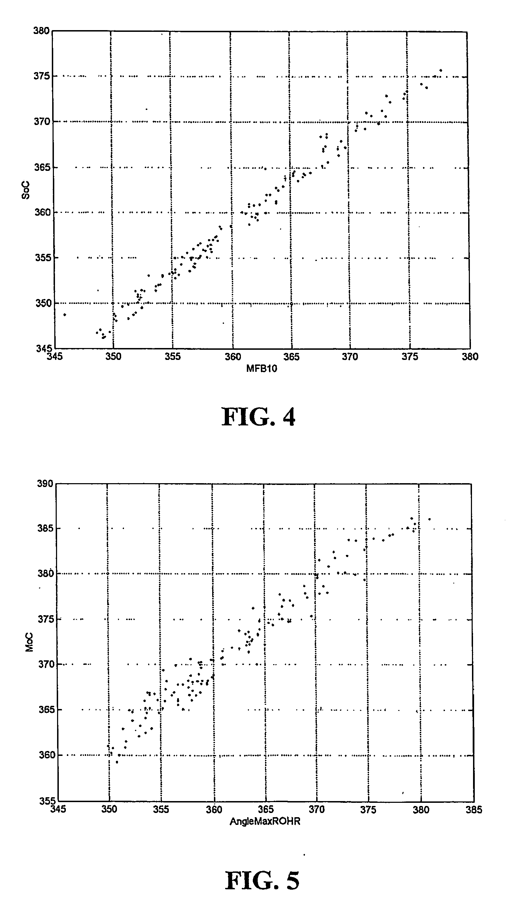

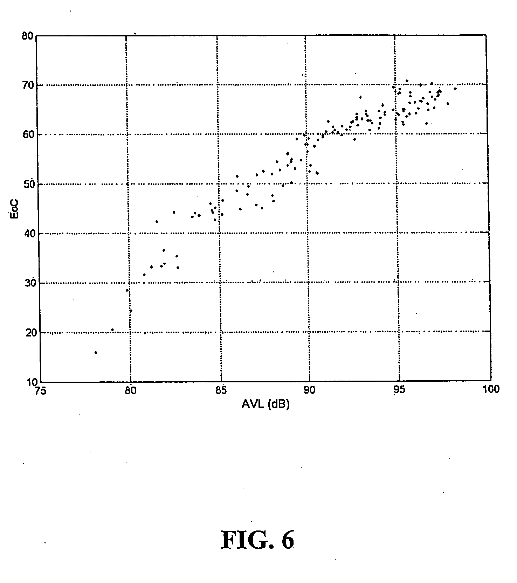

Les paramètres issus de l'analyse de combustion sont considérés comme des valeurs de référence par les experts du métier. Ainsi, le SoC est comparé au MFB10 représentant 10% de la courbe de masse de combustible brûlée MFB (Mass Fuel Burned), le MoC à l'angle vilebrequin correspondant au maximum de la courbe de dégagement de chaleur ROHR (Rate Of Heat Release), et l'EoC au bruit calculé par l'appareil de mesure de bruit AVL. A titre d'illustration de cette méthode, des résultats de corrélations du SoC, du MoC et EoC sont représentés dans les figures 4, 5 et 6 : la figure 4 montre la corrélation SoC et MFB10, la figure 5 montre la corrélation entre le MoC et l'angle d'occurrence du maximum sur la courbe de vitesse de libération d'énergie (AngleMaxROHR), et enfin, la figure 6 montre la corrélation entre l'EoC et le bruit AVL en dB.

Ces corrélations sont linéaires dans le cas du SoC et du MoC, et quadratiques monotones dans le cas du EoC. Il en résulte que les paramètres PoC constituent des variables pertinentes pour le contrôle de la combustion.

**Avantage de l'invention.**

La méthode proposée présente l'avantage, contrairement aux méthodes antérieures, d'accéder en temps réel à un ensemble de paramètres de combustion sans avoir recours à la mesure directe de la pression cylindre. Ainsi, à l'issue d'un cycle moteur, les paramètres de combustion sont disponibles et pourront être exploités pour faire un diagnostic du cycle écoulé, puis pour modifier (si nécessaire) les paramètres d'injections afin de garantir la stabilité de la combustion suivante et sa conformité par rapport au point de référence (initiation de la réaction, durée de combustion et bruit par exemple). On rappelle que l'analyse fréquentielle d'un signal peut se révéler coûteuse en terme de temps de calcul et inadéquate pour le traitement en temps réel. Ici, la méthode proposée est à la fois précise et rapide.

De plus, la méthode selon l'invention ne dépend pas de la nature de la combustion ou de la technologie du capteur utilisé. Les paramètres de réglages assurent une bonne adaptabilité de la méthode à diverses configurations moteur/capteur.

**Revendications**

**1.**    Méthode pour déterminer des paramètres de combustion d'un moteur à combustion interne comprenant au moins un capteur de vibration, dans laquelle on acquiert en continu et en fonction de l'angle vilebrequin un signal vibratoire issu dudit capteur et représentatif des vibrations dudit moteur, ledit signal vibratoire comportant plusieurs harmoniques, et l'on réalise en temps réel un filtrage dudit signal vibratoire à l'aide d'un filtre, la méthode étant **caractérisée en ce que** l'on réalise les étapes suivantes :

- on construit un modèle de la dynamique dudit filtre, et à partir de ce modèle on définit un estimateur non linéaire de type adaptatif comportant d'une part, un terme lié à la dynamique et d'autre part un terme de correction ;
- on estime en temps réel des coefficients de la décomposition de Fourier dudit signal vibratoire acquis à l'aide dudit estimateur ;
- on détermine l'énergie de k harmoniques dudit signal vibratoire par la somme de k coefficients de la décomposition de Fourier mis au carré, et l'on utilise la dite énergie pour déduire en temps réel des paramètres de combustion.

**2.**    Méthode selon la revendication 1, dans laquelle on estime lesdits coefficients de la décomposition de Fourier uniquement pour les harmoniques corrélées avec la combustion.

**3.**    Méthode selon la revendication 2, dans laquelle on sélectionne lesdites harmoniques corrélées avec la combustion en réalisant une analyse spectrale.

**4.**    Méthode selon la revendication 2, dans laquelle on sélectionne lesdites harmoniques corrélées avec la combustion en réalisant une analyse temps/fréquence.

**5.**    Méthode selon la revendication 2, dans laquelle on choisit lesdites harmoniques corrélées avec la combustion dans la bande de fréquence 300Hz - 3000Hz.

**6.**    Méthode selon l'une des revendications précédentes, dans laquelle le nombre d'harmoniques sélectionnées est trois.

**EP 1 994 390 B1**

**7.** Méthode selon l'une des revendications précédentes, dans laquelle on détermine une plage angulaire incluant l'intégralité de la réponse vibratoire liée à la combustion, et l'on restreint ledit signal vibratoire à cette plage angulaire avant de réaliser ledit filtrage.

**8.** Méthode selon l'une des revendications précédentes, dans laquelle ledit filtre est un filtre passe-bande.

**9.** Méthode selon l'une des revendications précédentes, dans laquelle lesdits paramètres de combustion représentent au moins l'un des phénomènes suivant : le début de la combustion, le maximum de la combustion, la durée de la combustion et l'énergie de la combustion.

**10.** Méthode selon l'une des revendications précédentes, dans laquelle on modifie des paramètres moteurs en fonction de ladite détermination desdits paramètres de combustion, pour contrôler la combustion dudit moteur.

**Claims**

**1.** A method for determining combustion parameters of an internal combustion engine including at least one vibration sensor, in which a vibratory signal coming from said sensor and representative of the vibrations of said engine is obtained continuously and as a function of the crankshaft angle, said vibratory signal comprising several harmonics, and filtering of said vibratory signal is achieved in real time by means of a filter, the method being **characterised in that** the following steps are carried out:

- a model of the dynamics of said filter is constructed, and from this model, a non-linear adaptive estimator comprising, on the one hand, a term related to the dynamics and on the other, a correction term, is defined;
- coefficients of the Fourier decomposition of said vibratory signal obtained by means of said estimator are estimated in real time;
- the energy of $k$ harmonics of said vibratory signal is determined by the sum of $k$ coefficients squared of the Fourier decomposition, and said energy is used to derive combustion parameters in real time.

**2.** The method according to Claim 1, in which said coefficients of the Fourier decomposition are estimated only for the harmonics which are correlated with the combustion.

**3.** The method according to Claim 2, in which said harmonics which are correlated with the combustion are selected by carrying out a spectral analysis.

**4.** The method according to Claim 2, in which said harmonics which are correlated with the combustion are selected by carrying out a time/frequency analysis:

**5.** The method according to Claim 2, in which said harmonics which are correlated with the combustion are chosen within the frequency band of 300Hz - 3000Hz.

**6.** The method according to one of the preceding claims, in which the number of selected harmonics is three.

**7.** The method according to one of the preceding claims, in which an angular range comprising the whole of the vibratory response related to the combustion is determined, and said vibratory signal is limited to this angular range before said filtering is carried out.

**8.** The method according to one of the preceding claims, in which said filter is a band-pass filter.

**9.** The method according to one of the preceding claims, in which said combustion parameters represent at least one of the following events: the start of the combustion, the maximum of the combustion, the duration of the combustion and the energy of the combustion.

**10.** The method according to one of the preceding claims, in which engine parameters are modified according to said determination of said combustion parameters in order to control the combustion of said engine.

15

**Patentansprüche**

1. Verfahren zum Bestimmen der Verbrennungsparameter eines Verbrennungsmotors, der mindestens einen Vibrationssensor umfasst, wobei kontinuierlich und in Abhängigkeit vom Kurbelwinkel ein Vibrationssignal erfasst wird, das von dem Sensor stammt, und für die Vibrationen des Motors repräsentativ ist, wobei das Vibrationssignal mehrere Harmonien umfasst, und in Echtzeit eine Filterung des Vibrationssignals mit Hilfe eines Filters durchgeführt wird, wobei das Verfahren **dadurch gekennzeichnet ist, dass** die folgenden Schritte durchgeführt werden:

   - Konstruieren eines Modells der Dynamik des Filters, und ausgehend von diesem Modell, Definieren einer nicht linearen adaptiven Schätzfunktion, die einerseits eine Größe, die sich auf die Dynamik bezieht, und andererseits eine Korrekturgröße umfasst;
   - Schätzen in Echtzeit der Fourier-Zerlegungskoeffizienten des Vibrationssignals, das mit Hilfe der Schätzfunktion erfasst wird;
   - Bestimmen der Energie von $k$ Harmonien des Vibrationssignals durch die Summe von $k$ Fourier-Zerlegungskoeffizienten zum Quadrat, und Verwenden der Energie zum Ableiten der Verbrennungsparameter in Echtzeit.

2. Verfahren nach Anspruch 1, wobei die Fourier-Zerlegungskoeffizienten nur für die Harmonien geschätzt werden, die mit der Verbrennung korreliert sind.

3. Verfahren nach Anspruch 2, wobei die Harmonien, die mit der Verbrennung korreliert sind, ausgewählt werden, indem eine Spektralanalyse durchgeführt wird.

4. Verfahren nach Anspruch 2, wobei die Harmonien, die mit der Verbrennung korreliert sind, ausgewählt werden, indem eine Zeit-FrequenzAnalyse durchgeführt wird.

5. Verfahren nach Anspruch 2, wobei die Harmonien, die mit der Verbrennung korreliert sind, aus dem Frequenzband zwischen 300 Hz und 3.000 Hz gewählt werden.

6. Verfahren nach einem der vorhergehenden Ansprüche, wobei die Anzahl der ausgewählten Harmonien drei beträgt.

7. Verfahren nach einem der vorhergehenden Ansprüche, wobei ein Winkelbereich bestimmt wird, der die Gesamtheit der verbrennungsbezogenen Vibrationsreaktion beinhaltet, und das Vibrationssignal auf diesen Winkelbereich beschränkt wird, bevor die Filterung durchgeführt wird.

8. Verfahren nach einem der vorhergehenden Ansprüche, wobei der Filter ein Bandpassfilter ist.

9. Verfahren nach einem der vorhergehenden Ansprüche, wobei die Verbrennungsparameter mindestens eines der folgenden Phänomene repräsentieren: Den Beginn der Verbrennung, die maximale Verbrennung, die Dauer der Verbrennung und die Energie der Verbrennung.

10. Verfahren nach einem der vorhergehenden Ansprüche, wobei Motorparameter in Abhängigkeit von der Bestimmung der Verbrennungsparameter modifiziert werden, um die Verbrennung des Motors zu kontrollieren.

**FIG. 1**

**FIG. 2**

FIG. 3A

FIG. 3B

FIG. 3C

FIG. 3D

FIG. 3E

FIG. 3F

19

**FIG. 4**

**FIG. 5**

**FIG. 6**

## RÉFÉRENCES CITÉES DANS LA DESCRIPTION

**Documents brevets cités dans la description**

- EP 1116946 A
- US 2004267430 A
- WO 05001263 A
- DE 19536110
- FR 2739414
- FR 2834789
- US 2004236494 A1
- EP 0724159 A1

**Littérature non-brevet citée dans la description**

- Spark advance modeling and control. **L. Eriksson.** Ph.D. thesis. Linköping University, 1999
- **S. J. Citron ; J. E. O'Higgins ; L. Y. Chen.** Cylinder by cylinder engine pressure and pressure torque waveform determination utilizing speed fluctuations. *SAE Paper,* 1989
- **Y. Gao ; R. B. Randall.** Reconstruction of Diesel engine cylinder pressure using a time domain smoothing technique. *Mechanical Systems and Signal Processing,* 1999, vol. 13 (5), 709-722
- **H. Du ; L. Zhang ; X. Shi.** Reconstructing cylinder pressure from vibration signals based on radial basis function networks. *Proceedings of the Institution of Mechanical Engineers,* 2001, vol. 215, 761-767
- **R. Johnsson.** Cylinder pressure reconstruction based on complex radial basis function networks from vibration and speed signals. *Mechanical Systems and Signal Processing,* 2006
- **Friedlander, B. ; B. Porat.** The Modified Yule-Walker Method of ARMA Spectral Estimation. *IEEE Transactions on Aerospace Electronic Systems,* Mars 1984, vol. AES-20 (2), 158-173